# EUROPEAN PATENT APPLICATION

(11) **EP 4 657 806 A1**
(43) Date of publication of application: **03.12.2025**
(21) Application number: 25722457.6
(22) Date of filing: 07.02.2025
(51) Int. Cl.: H04L 12/46, F24F 11/50, F24F 11/88

(54) **RELAY DEVICE, AND OUTDOOR UNIT AND INDOOR UNIT PROVIDED WITH SAID RELAY DEVICE**

(30) Priority: 15.04.2024 JP 2024065379
(71) Applicant: DAIKIN INDUSTRIES, LTD., Osaka-Shi, Osaka 530-0001 (JP)
(72) Inventor: KODERA, Keita, Osaka-shi, Osaka 530-0001 (JP); HIGASHIYAMA, Shin, Osaka-shi, Osaka 530-0001 (JP); SOGABE, Masaharu, Osaka-shi, Osaka 530-0001 (JP); NAGAHARA, Keiya, Osaka-shi, Osaka 530-0001 (JP); CHIHARA, Minoru, Osaka-shi, Osaka 530-0001 (JP)
(74) Representative: Global IP Europe Patentanwaltskanzlei
(86) International application number: PCT/JP2025/004056
(87) International publication number: WO 2025/220306

(57) **Abstract**

Provided is a relay device that is be connectable without distinction between a device of a conventional communication scheme and a device of a new communication scheme and enables communication between new and old devices. In a relay device (50), when a first air conditioner (100) is connected to a second connecting portion (20), a path switching portion (40) switches a transmission path to a first transmission path (D1) connecting the first connecting portion (10) and the second connecting portion (20) without passing through a communication converter (30). When a second air conditioner (200) is connected to the second connecting portion (20), the path switching portion (40) switches the transmission path to a second transmission path (D2) connecting the first connecting portion (10) and the second connecting portion (20) via the communication converter (30). Since the relay device (50) automatically switches the transmission path in accordance with a communication scheme adopted by the air conditioner connected to the second connecting portion (20), the relay device (50) facilitates work of a contractor.

## Description

### TECHNICAL FIELD

The present disclosure relates to a relay device that switches a communication scheme, and relates to an outdoor unit and an indoor unit that include the relay device.

### BACKGROUND ART

For an introduction of an air conditioner in which inter-device communication is replaced with a new communication scheme different from a conventional communication scheme into a market, a form is assumed in which an air conditioner including a device of the conventional communication scheme that partially updates an existing air conditioning system and an air conditioner including a device of the new communication scheme are mixed and interconnected. For example, a communication conversion device described in Patent Literature 1 (JP 3789589 B2) includes a conventional communication circuit and a new communication circuit. In a case where a device of a conventional communication scheme is connected to the conventional communication circuit and a device of a new communication scheme is connected to the new communication circuit, a green LED lamp indicating normal is turned on. In a case where an erroneous connection is made, a red LED lamp is turned on or blinks to give a warning.

### SUMMARY OF THE INVENTION

### <Technical Problem>

However, in a construction site where a plurality of inter-device communication lines is routed, it is not easy for a contractor to determine a connection destination of a device of the conventional communication scheme.

Therefore, there is a demand for a relay device that is connectable without distinction of a communication scheme of a signal transmitted by a device and enables communication between devices of different communication schemes.

### <Solution to Problem>

A relay device according to a first aspect relays communication between a first air conditioner that transmits a signal of a first communication scheme and a second air conditioner that transmits a signal of a second communication scheme, and includes a communication converter, a first connecting portion, a second connecting portion, and a path switching portion. The communication converter converts a communication scheme between the first communication scheme and the second communication scheme. The first connecting portion is a connecting portion to which the first air conditioner is connectable. The second connecting portion is a connecting portion to which the first air conditioner or the second air conditioner is connectable. The path switching portion switches a transmission path of a signal input to the second connecting portion on the basis of a signal input from an air conditioner connected to the second connecting portion. When the first air conditioner is connected to the second connecting portion, the path switching portion switches the transmission path to a first transmission path. The first transmission path is a transmission path that connects the first connecting portion and the second connecting portion without passing through the communication converter. When the second air conditioner is connected to the second connecting portion, the path switching portion switches the transmission path to a second transmission path. The second transmission path is a transmission path that connects the first connecting portion and the second connecting portion via the communication converter.

Since this relay device automatically switches the transmission path in accordance with the communication scheme adopted by the air conditioner connected to the second connecting portion, the relay device facilitates the work of a contractor.

A relay device according to a second aspect is the relay device according to the first aspect, and further includes a feature extractor and a scheme determiner. The feature extractor extracts a feature of a signal input to the second connecting portion. The scheme determiner determines whether the signal input to the second connecting portion is in the first communication scheme or the second communication scheme on the basis of the feature. When the signal is determined to be in the first communication scheme, the path switching portion switches the transmission path to the first transmission path. When the signal is determined to be in the second communication scheme, the path switching portion switches the transmission path to the second transmission path.

In this relay device, since the communication scheme is determined by the feature of the signal, conventional confirmation of the connection partner for each communication circuit is not necessary, and control is easy.

A relay device according to a third aspect is the relay device according to the second aspect, in which the feature extractor extracts a feature of a signal transmitted between the second connecting portion and the path switching portion.

In this relay device, in a section between the second connecting portion and the path switching portion, a signal is transmitted regardless of a path set in advance in the path switching portion. Therefore, the section is the most reasonable section as a signal feature extraction section.

A relay device according to a fourth aspect is the relay device according to the second aspect, in which the path switching portion is switched to the second transmission path in advance. The feature extractor extracts features of a signal transmitted between the path switching portion and the communication converter.

In this relay device, since the signal is always transmitted between the path switching portion and the communication converter, the feature of the signal can be reliably extracted.

A relay device according to a fifth aspect is the relay device according to the second aspect, in which the path switching portion is switched to the first transmission path in advance. The feature extractor extracts a feature of a signal transmitted between the path switching portion and the first connecting portion.

In this relay device, since the signal is always transmitted between the path switching portion and the first connecting portion, the feature of the signal can be reliably extracted.

A relay device according to a sixth aspect is the relay device according to any one of the second to fifth aspects, in which the feature extractor extracts an intermediate value of a waveform of the signal. When the intermediate value is greater than or equal to a predetermined value, the scheme determiner determines that the signal input to the second connecting portion is in the second communication scheme. When the intermediate value is less than the predetermined value, the scheme determiner determines that the signal input to the second connecting portion is in the first communication scheme.

This relay device makes it possible to distinguish between a scheme in which a signal is biased and a scheme in which a signal is not biased, for example.

A relay device according to a seventh aspect is the relay device according to any one of the second to fifth aspects, in which the feature extractor extracts predetermined communication data included in the signal. The scheme determiner determines whether the signal input to the second connecting portion is in the first communication scheme or the second communication scheme on the basis of a content of the predetermined communication data.

In this relay device, it is possible to distinguish a communication scheme depending on a difference in the communication data.

A relay device according to an eighth aspect is the relay device according to any one of the second to seventh aspects, and further includes a first communication unit, a second communication unit, and a communication circuit control unit. The first communication unit can transmit a signal in the first communication scheme. The second communication unit can transmit a signal in the second communication scheme. The communication circuit control unit stops an operation of the first communication unit. When the scheme determiner detects that the signal of the first communication scheme is input, the communication circuit control unit stops the operation of at least one of the first communication unit or the second communication unit.

In this relay device, when the first air conditioner is connected to the second connecting portion, the transmission path is switched to the first transmission path connecting the first connecting portion and the second connecting portion without passing through the communication converter, and the first communication unit in the relay device is not required to operate. Therefore, the communication circuit control unit stops the operation of the first communication unit, and unnecessary power consumption is suppressed. When the first communication scheme has an upper limit on the number of connectable communication nodes, the communication circuit control unit stops the operation of the first communication unit, and the number of communication nodes can be saved.

A relay device according to a ninth aspect is the relay device according to the eighth aspect, in which the communication converter converts the signal of the second communication scheme transmitted from the second communication unit into a signal of the first communication scheme communicable with the first communication unit, and transmits the signal to the first communication unit.

A relay device according to a tenth aspect is the relay device according to any one of the first to ninth aspects, and further includes a path shutoff portion. The path shutoff portion is interposed between the second connecting portion and the path switching portion, and electrically shuts off connection between the second connecting portion and the path switching portion while power supply to the relay device is stopped.

In this relay device, by separating the communication circuit of the relay device from an existing communication wiring, a decrease in impedance of the communication path is suppressed, and a decrease in communication performance of an existing communication system is suppressed.

An outdoor unit according to an eleventh aspect includes the relay device according to any one of the first to tenth aspects and a control circuit. The control circuit connects an indoor unit that performs communication in the first communication scheme via the first connecting portion.

An indoor unit according to a twelfth aspect is an indoor unit including the relay device according to any one of the first to tenth aspects and a control circuit. The control circuit connects another indoor unit that performs communication in the first communication scheme via the first connecting portion.

An air conditioning system according to a thirteenth aspect is an air conditioning system including the first air conditioner and the relay device according to any one of the first to tenth aspects.

### BRIEF DESCRIPTION OF THE DRAWINGS

FIG. 1 is a block diagram showing a state in which an outdoor unit communication circuit of a first air conditioner and a second air conditioner communication circuit of a second air conditioner are connected to each other via a relay device according to a first embodiment.
FIG. 2 is a circuit diagram of a feature extractor.
FIG. 3 is a flowchart showing an operation of the relay device according to the first embodiment.
FIG. 4 is a block diagram showing a state in which the outdoor unit communication circuit of the first air conditioner and the second air conditioner communication circuit of the second air conditioner are electrically connected to each other via a relay device according to a first modification.
FIG. 5 is a block diagram showing a state in which the outdoor unit communication circuit of the first air conditioner and the second air conditioner communication circuit of the second air conditioner are electrically connected to each other via a relay device according to a second modification.
FIG. 6 is a block diagram showing a state in which the outdoor unit communication circuit of the first air conditioner and the second air conditioner communication circuit of the second air conditioner are electrically connected to each other via a relay device according to a second embodiment.
FIG. 7 is a block diagram showing a state in which the outdoor unit communication circuit of the first air conditioner and the second air conditioner communication circuit of the second air conditioner are electrically connected to each other via a relay device according to a third embodiment.
FIG. 8 is a flowchart showing an operation of the relay device according to the third embodiment.
FIG. 9 is a block diagram showing a state in which the outdoor unit communication circuit of the first air conditioner and the second air conditioner communication circuit of the second air conditioner 200 are electrically connected to each other via a relay device according to a fourth embodiment.
FIG. 10A is a flowchart showing an operation of the relay device according to the fourth embodiment.
FIG. 10B is a flowchart showing the operation of the relay device according to the fourth embodiment.
FIG. 11A is a circuit diagram of a feature extractor equipped on a relay device according to another embodiment.
FIG. 11B is a conceptual diagram of an AMI-encoded signal input to the feature extractor.
FIG. 11C is an enlarged diagram of one character in FIG. 11B.

### DESCRIPTION OF EMBODIMENTS

### <First embodiment>

### (1) Overall configuration

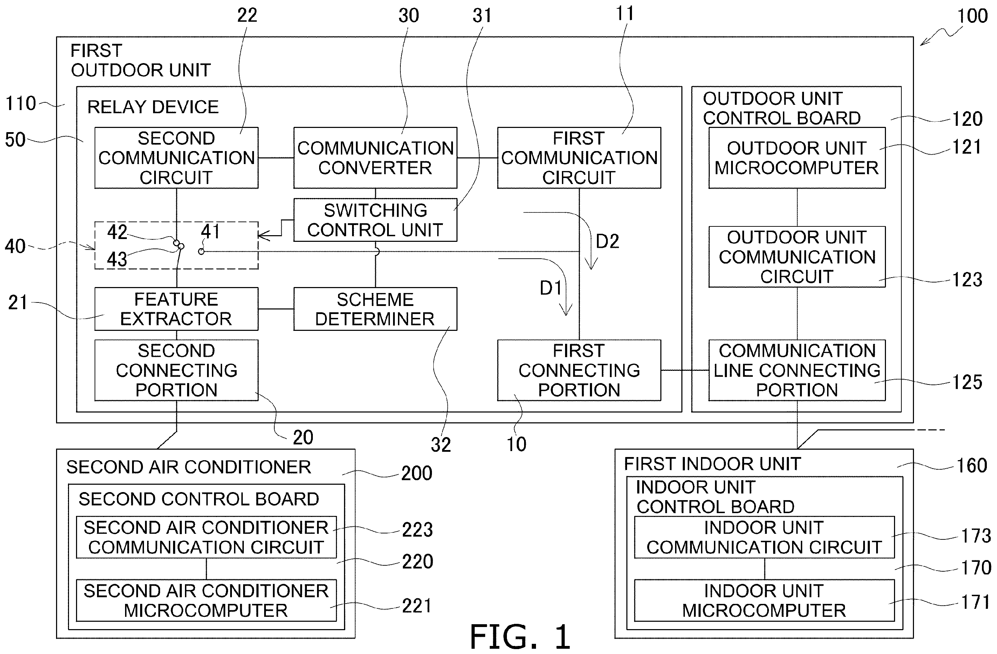

FIG. 1 is a block diagram showing a state in which an outdoor unit communication circuit 123 of a first air conditioner 100 and a second air conditioner communication circuit 223 of a second air conditioner 200 are electrically connected to each other via a relay device 50 according to a first embodiment. Here, "electrically connected" means that connection is made such that a signal is transmitted by a communication line, and a similar meaning is also used in the following description. As shown in FIG. 1, the first air conditioner 100 and the second air conditioner 200 are electrically connected to each other via the relay device 50 to configure an air conditioning system. The air conditioning system includes at least the first air conditioner 100 and the relay device 50.

### (1-1) First air conditioner 100

In FIG. 1, the first air conditioner 100 includes a first outdoor unit 110 and a first indoor unit 160. The first air conditioner 100 is not limited to an outdoor unit and an indoor unit. The first air conditioner 100 may be, for example, a device such as a centralized controller or a remote controller.

The first outdoor unit 110 is equipped with an outdoor unit control board 120. An outdoor unit microcomputer 121, an outdoor unit communication circuit 123, and a communication line connecting portion 125 are mounted on the outdoor unit control board 120.

The first indoor unit 160 is equipped with an indoor unit control board 170. An indoor unit microcomputer 171 and an indoor unit communication circuit 173 are mounted on the indoor unit control board 170. The indoor unit control board 170 is connected to the communication line connecting portion 125 of the outdoor unit control board 120 via a communication line.

The indoor unit communication circuit 173 and the outdoor unit communication circuit 123 can perform bidirectional communication by using a first communication scheme which is the same communication scheme.

### (1-2) Second air conditioner 200

Similarly to the first air conditioner 100, the second air conditioner 200 includes an outdoor unit and an indoor unit. The second air conditioner 200 is not limited to an outdoor unit and an indoor unit. The second air conditioner 200 may be, for example, a device such as a centralized controller or a remote controller.

The second air conditioner 200 is equipped with a second control board 220. A second air conditioner microcomputer 221 and a second air conditioner communication circuit 223 are mounted on the second control board 220. The second air conditioner communication circuit 223 performs communication by using a signal of a second communication scheme different from the first communication scheme.

### (1-3) Relay device 50

The relay device 50 is a device for enabling bidirectional communication between two communication circuits having different communication schemes.

The relay device 50 includes a first connecting portion 10, a first communication circuit 11, a second connecting portion 20, a feature extractor 21, a second communication circuit 22, a communication converter 30, a switching control unit 31, a scheme determiner 32, and a path switching portion 40.

### (1-3-1) First connecting portion 10

The first connecting portion 10 is electrically connected to the first communication circuit 11 and the communication line connecting portion 125. A signal from the first communication circuit 11 is transmitted to the communication line connecting portion 125 via the first connecting portion 10.

The first connecting portion 10 is also electrically connected to a first contact 41 of the path switching portion 40. A signal from the first contact 41 of the path switching portion 40 is also transmitted to the communication line connecting portion 125 via the first connecting portion 10.

### (1-3-2) First communication circuit 11

The first communication circuit 11 is electrically connected to the communication converter 30 and the first connecting portion 10. The first communication circuit 11 performs bidirectional communication with the outdoor unit communication circuit 123 by the first communication scheme that is the same as the communication scheme of the outdoor unit communication circuit 123 and the indoor unit communication circuit 173 of the first air conditioner 100. A signal from the communication converter 30 is transmitted to the first connecting portion 10 via the first communication circuit 11.

### (1-3-3) Second connecting portion 20

The second connecting portion 20 is electrically connected to the second air conditioner communication circuit 223 of the second air conditioner 200 and the feature extractor 21. A signal from the second air conditioner communication circuit 223 is transmitted to the feature extractor 21 via the second connecting portion 20.

### (1-3-4) Feature extractor 21

The feature extractor 21 is electrically connected to the second connecting portion 20 and the path switching portion 40. A signal from the second connecting portion 20 is transmitted to the path switching portion 40 via the feature extractor 21.

The feature extractor 21 is also electrically connected to the scheme determiner 32. The feature extractor 21 extracts features of the signal transmitted from the second connecting portion 20, and sends the extracted features to the scheme determiner 32 as signal feature information. For example, the feature extractor 21 extracts an intermediate value of a signal voltage, and the scheme determiner 32 to be described later determines whether the intermediate value is less than a predetermined value or equal to or greater than the predetermined value.

### (1-3-5) Scheme determiner 32

The scheme determiner 32 determines whether the signal transmitted from the second connecting portion 20 is a signal of the first communication scheme or a signal of the second communication scheme on the basis of the feature extracted by the feature extractor 21. The scheme determiner 32 is also electrically connected to the switching control unit 31, and sends a determination result to the switching control unit 31.

### (1-3-6) Switching control unit 31

The switching control unit 31 is electrically connected to the path switching portion 40. The switching control unit 31 controls path switching of the path switching portion 40 on the basis of the determination result from the scheme determiner 32.

### (1-3-7) Path switching portion 40

The path switching portion 40 employs a relay. The relay may be a contact relay or a non-contact relay. In the present embodiment, a contact relay is employed.

The path switching portion 40 includes a first contact 41, a second contact 42, and a third contact 43 that can contact one of the first contact 41 or the second contact 42. The third contact 43 is electrically connected to the feature extractor 21.

In the present embodiment, the third contact 43 of the path switching portion 40 is controlled by the switching control unit 31 to come into contact with any one of the first contact 41 or the second contact 42.

For example, when the scheme determiner 32 determines that the signal transmitted from the second connecting portion 20 is a signal of the second communication scheme, the switching control unit 31 controls the third contact 43 of the path switching portion 40 to come into contact with the second contact 42.

On the other hand, when the scheme determiner 32 determines that the signal transmitted from the second connecting portion 20 is a signal of the first communication scheme, the switching control unit 31 controls the third contact 43 of the path switching portion 40 to come into contact with the first contact 41.

However, in an initial state and without any operation from the switching control unit 31, the third contact 43 is in contact with the second contact 42.

### (1-3-8) Second communication circuit 22

The second communication circuit 22 is electrically connected to the second contact 42 of the path switching portion 40 and the communication converter 30. In the present embodiment, a signal from the path switching portion 40 is transmitted to the communication converter 30 via the second communication circuit 22.

The second communication circuit 22 performs bidirectional communication with the second air conditioner communication circuit 223 by the second communication scheme that is the same as the communication scheme of the second air conditioner communication circuit 223 of the second air conditioner 200.

### (1-3-9) Communication converter 30

The communication converter 30 is electrically connected to the second communication circuit 22 and the first communication circuit 11. The communication converter 30 converts the signal of the second communication scheme transmitted from second communication circuit 22 into a signal of the first communication scheme, and transmits the signal to first communication circuit 11.

### (1-3-10) First transmission path D1 and second transmission path D2

In the present embodiment, a path through which signals flow in the order of the second connecting portion 20, the feature extractor 21, the path switching portion 40, and the first connecting portion 10 is referred to as a first transmission path D1. A path through which signals flow in the order of the second connecting portion 20, the feature extractor 21, the path switching portion 40, the second communication circuit 22, the communication converter 30, the first communication circuit 11, and the first connecting portion 10 is referred to as a second transmission path D2.

### (2) Detailed configuration of feature extractor 21

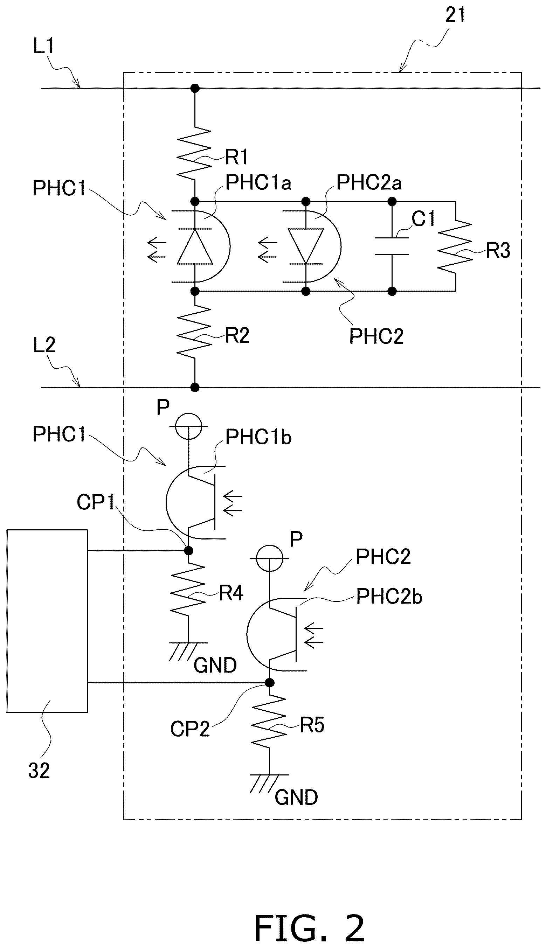

FIG. 2 is a circuit diagram of the feature extractor 21. In FIG. 2, the feature extractor 21 includes a first photocoupler PHC1, a second photocoupler PHC2, a first resistor R1, a second resistor R2, a third resistor R3, a fourth resistor R4, a fifth resistor R5, and a capacitor C1.

### (2-1) First photocoupler PHC1

The first photocoupler PHC1 includes a first light emitting diode PHC1a as a light projector and a first phototransistor PHC1b as a light receiver.

The first resistor R1, the first light emitting diode PHC1a, and the second resistor R2 are connected in series, and are connected between a first communication line L1 and a second communication line L2.

Specifically, one end of the first resistor R1 is connected to the first communication line L1, a cathode of the first light emitting diode PHC1a is connected to the other end of the first resistor R1, one end of the second resistor R2 is connected to an anode of the first light emitting diode PHC1a, and the other end of the second resistor R2 is connected to the second communication line L2.

The first phototransistor PHC1b and the fourth resistor R4 are connected in series, a collector of the first phototransistor PHC1b is connected to a constant voltage power source P, an emitter is connected to one end of the fourth resistor R4, and the other end of the fourth resistor R4 is connected to a GND.

A first connecting point CP1 between the emitter of the first phototransistor PHC1b and the fourth resistor R4 is electrically connected to the scheme determiner 32.

### (2-2) Second photocoupler PHC2

The second photocoupler PHC2 includes a second light emitting diode PHC2a as a light projector and a second phototransistor PHC2b as a light receiver.

The second light emitting diode PHC2a is connected in anti-parallel with the first light emitting diode PHC1a. "Connected in anti-parallel" means to be connected in parallel with forward directions reversed from each other. Specifically, the forward direction of the first light emitting diode PHC1a is a direction from the second communication line L2 toward the first communication line L1, and the forward direction of the second light emitting diode PHC2a is a direction from the first communication line L1 toward the second communication line L2.

The capacitor C1 and the third resistor R3 are connected in parallel to the second light emitting diode PHC2a.

The second phototransistor PHC2b and the fifth resistor R5 are connected in series, a collector of the second phototransistor PHC2b is connected to the constant voltage power source P, an emitter is connected to one end of the fifth resistor R5, and the other end of the fifth resistor R5 is connected to the GND.

The second connecting point CP2 between the emitter of the second phototransistor PHC2b and the fifth resistor R5 is electrically connected to the scheme determiner 32.

### (2-3) Operation of feature extractor 21

When a signal voltage of a predetermined value or more is applied from the second communication line L2 to the first communication line L1, the first light emitting diode PHC1a emits light, and a voltage accompanying the light emission of the first light emitting diode PHC1a is input to a base of the first phototransistor PHC1b. In this case, the first phototransistor PHC1b is turned on by the light emission of the first light emitting diode PHC1a, and a first predetermined voltage is input from the first connecting point CP1 to the scheme determiner 32.

When a signal voltage of a predetermined value or more is applied from the first communication line L1 to the second communication line L2, the second light emitting diode PHC2a emits light, and a voltage accompanying the light emission of the second light emitting diode PHC2a is input to a base of the second phototransistor PHC2b. In this case, the second phototransistor PHC2b is turned on by the light emission of the second light emitting diode PHC2a, and a second predetermined voltage is input from the second connecting point CP2 to the scheme determiner 32.

In the present embodiment, the predetermined value may be set by a peak value of the signal voltage or an intermediate value. In the present embodiment, the predetermined value is set by an intermediate value of the signal voltage.

When the first predetermined voltage is input from the first connecting point CP1 to the scheme determiner 32 or when the second predetermined voltage is input from the second connecting point CP2 to the scheme determiner 32, the scheme determiner 32 determines the second communication scheme.

The feature extractor 21 includes the first photocoupler PHC1 and the second photocoupler PHC2 such that the first light emitting diode PHC1a and the second light emitting diode PHC2a are in anti-parallel. Therefore, the feature extractor 21 can extract the feature of the signal of the second communication scheme regardless of the direction of the signal input between the first communication line L1 and the second communication line L2.

### (3) Operation of relay device 50

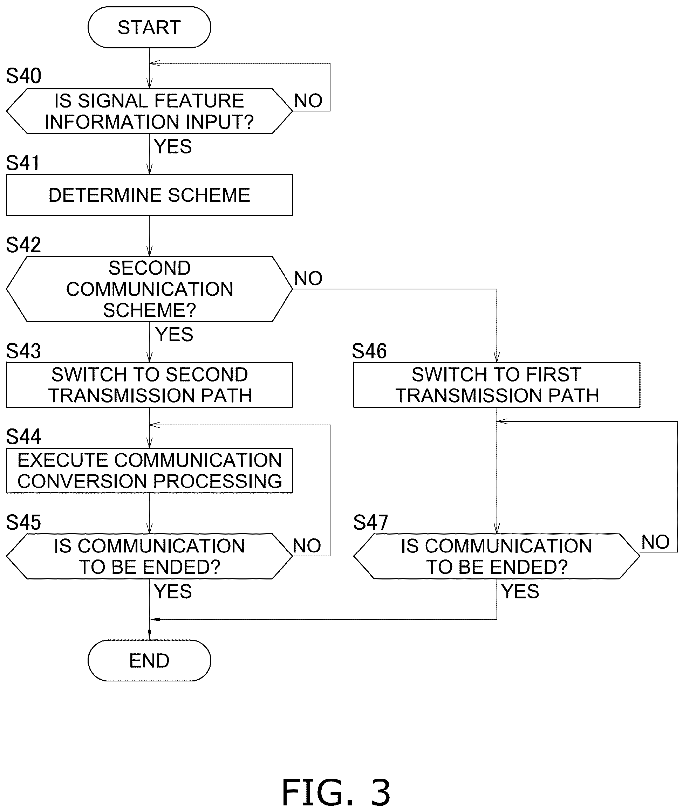

FIG. 3 is a flowchart showing an operation of the relay device 50 according to the first embodiment. Hereinafter, the operation of the relay device 50 will be described with reference to FIG. 3. In the present embodiment, the switching control unit 31 integrally controls each part of the relay device 50.

### (Step S40)

In step S40, the scheme determiner 32 determines whether the signal feature information is input from the feature extractor 21.

### (Step S41)

In step S41, the scheme determiner 32 determines the communication scheme of the signal transmitted from the second connecting portion 20 on the basis of the information from the feature extractor 21, and sends the determination result to the switching control unit 31.

### (Step S42)

In step S42, the switching control unit 31 determines whether the determination result from the scheme determiner 32 is the "second communication scheme", proceeds to step S43 when the determination result is the "second communication scheme", and proceeds to step S46 when the determination result is the "first communication scheme".

### (Step S43)

In step S43, the switching control unit 31 brings the third contact 43 into contact with the second contact 42 such that the path switching portion 40 is connected to the second communication circuit 22, and switches the transmission path to the second transmission path D2.

### (Step S44)

In step S44, the communication converter 30 converts the signal of the second communication scheme transmitted from second communication circuit 22 into a signal of the first communication scheme. The signal of the first communication scheme is transmitted from the first communication circuit 11 to the outdoor unit communication circuit 123 of the first air conditioner 100 via the first connecting portion 10.

### (Step S45)

In step S45, the switching control unit 31 determines whether to end a communication conversion operation. For example, when detecting that a communication conversion stop button (not shown) included in the relay device 50 is operated, the switching control unit 31 may determine to end the communication conversion operation. The switching control unit 31 may end the communication conversion when a power supply is stopped.

### (Step S46)

In step S46, the switching control unit 31 brings the third contact 43 into contact with the first contact 41 such that the path switching portion 40 is connected to the outdoor unit communication circuit 123, and switches the transmission path to the first transmission path D1.

### (Step S47)

In step S47, the switching control unit 31 determines whether to end the communication conversion operation. As in step S45, for example, when detecting that the communication conversion stop button included in the relay device 50 is operated, the switching control unit 31 may determine to end the communication conversion operation. The switching control unit 31 may end the communication conversion when a power supply is stopped.

As described above, bidirectional communication is possible even when the second air conditioner 200 using the second communication scheme different from the first communication scheme used by the first air conditioner 100 is connected to the second connecting portion 20.

### (4) Modifications

In the present embodiment, the feature extractor 21 is electrically connected between the second connecting portion 20 and the path switching portion 40, but the present disclosure is not limited to this configuration, and will be described below as a modification.

### (4-1) First modification

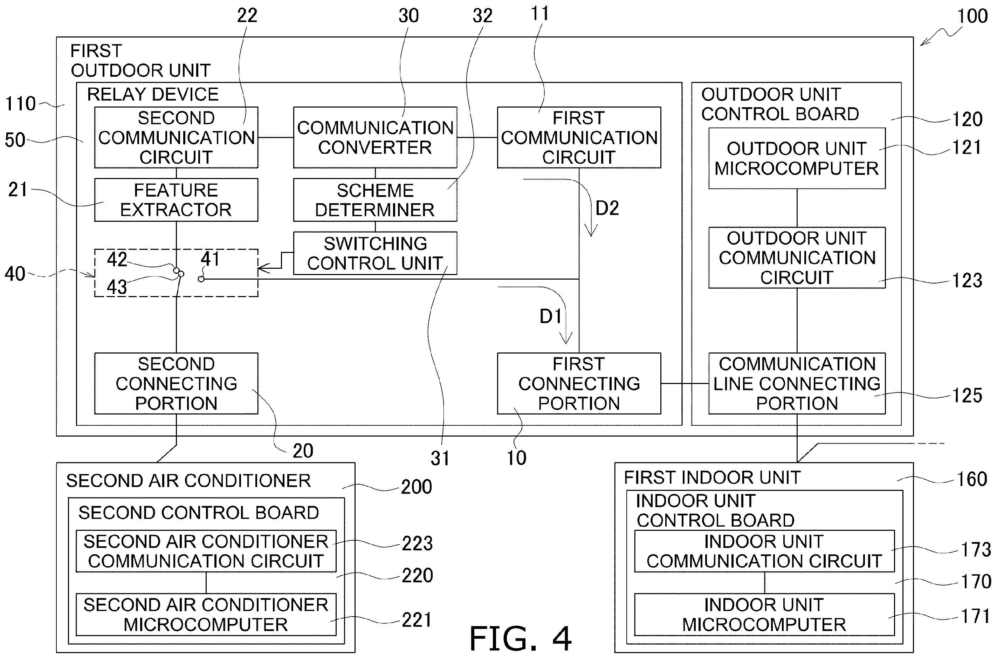

FIG. 4 is a block diagram showing a state in which the outdoor unit communication circuit 123 of the first air conditioner 100 and the second air conditioner communication circuit 223 of the second air conditioner 200 are electrically connected to each other via the relay device 50 according to a first modification.

In FIG. 4, a difference from FIG. 1 is that the feature extractor 21 is electrically connected between the path switching portion 40 and the second communication circuit 22. Other configurations are similar to those of the first embodiment, and thus will not be described.

In the path switching portion 40, the second contact 42 and the third contact 43 are in contact with each other by default to form the second transmission path D2. Therefore, it is sufficient that the feature of the signal is specified while the signal is transmitted from the path switching portion 40 to the communication converter 30.

Therefore, the feature extractor 21 may be electrically connected between the path switching portion 40 and the communication converter 30.

### (4-2) Second modification

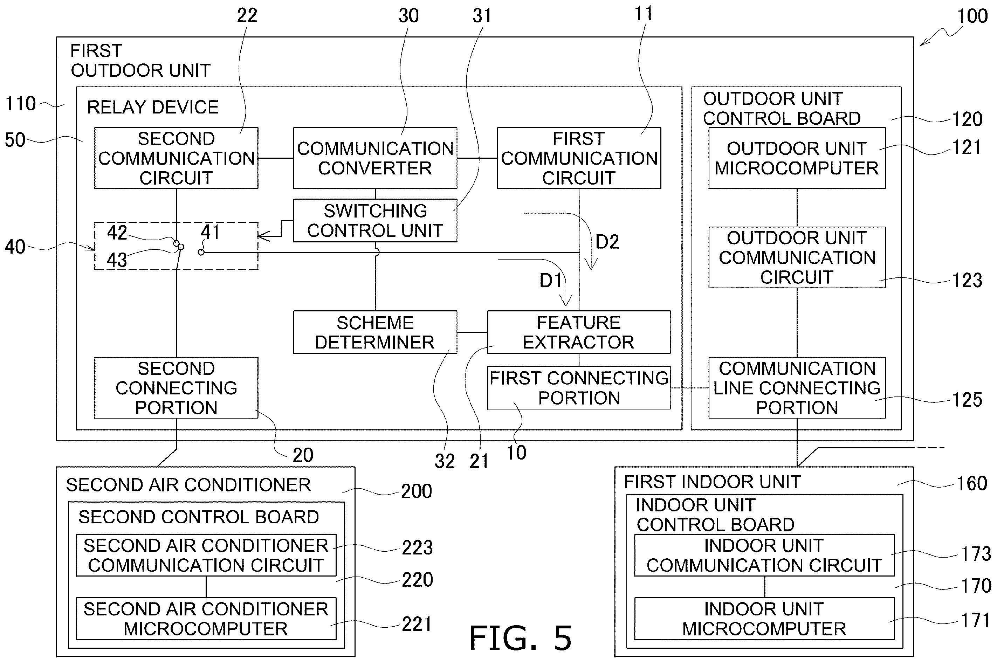

FIG. 5 is a block diagram showing a state in which the outdoor unit communication circuit 123 of the first air conditioner 100 and the second air conditioner communication circuit 223 of the second air conditioner 200 are electrically connected to each other via the relay device 50 according to a second modification.

In FIG. 5, a difference from FIG. 1 is that the feature extractor 21 is electrically connected between the path switching portion 40 and the first connecting portion 10, and in the path switching portion 40, the first contact 41 and the third contact 43 are in contact with each other by default to form the first transmission path D1. Other configurations are similar to those of the first embodiment, and thus will not be described.

Since the path switching portion 40 forms the first transmission path D1 by default, it is sufficient that the feature of the signal is specified while the signal is transmitted from the path switching portion 40 to the first connecting portion 10.

### (5) Characteristics

### (5-1)

In the relay device 50, when the first air conditioner 100 is connected to the second connecting portion 20, the path switching portion 40 switches the transmission path to the first transmission path D1 connecting the first connecting portion 10 and the second connecting portion 20 without passing through the communication converter 30. When the second air conditioner 200 is connected to the second connecting portion 20, the path switching portion 40 switches the transmission path to the second transmission path D2 connecting the first connecting portion 10 and the second connecting portion 20 via the communication converter 30. Since the relay device 50 automatically switches the communication path in accordance with the communication scheme adopted by the air conditioner connected to the second connecting portion 20, the relay device 50 facilitates the work of a contractor.

### (5-2)

In the relay device 50, the feature extractor 21 extracts a feature of a signal input to the second connecting portion 20. The scheme determiner 32 determines whether the signal input to the second connecting portion 20 is in the first communication scheme or the second communication scheme on the basis of the feature. In the relay device 50, since the communication scheme is determined by the feature of the signal, confirmation of the connection partner for each communication circuit is not necessary, and control is easy.

### (5-3)

The feature extractor 21 extracts a feature of a signal transmitted between the second connecting portion 20 and the path switching portion 40. In a section between the second connecting portion 20 and the path switching portion 40, a signal is transmitted regardless of a path set in advance in the path switching portion 40. Therefore, the section is the most reasonable section as a signal feature extraction section.

### (5-4)

In the relay device 50, when the path switching portion 40 is switched to the second transmission path D2 in advance, the feature extractor 21 may extract a feature of a signal transmitted between the path switching portion 40 and the communication converter 30. Since the signal is always transmitted between the path switching portion 40 and the communication converter 30, the feature of the signal can be reliably extracted.

### (5-5)

In the relay device 50, when the path switching portion 40 is switched to the first transmission path D1 in advance, the feature extractor 21 may extract a feature of a signal transmitted between the path switching portion 40 and the first connecting portion 10. Since the signal is always transmitted between the path switching portion 40 and the first connecting portion 10, the feature of the signal can be reliably extracted.

### (5-6)

In the relay device 50, the feature extractor 21 extracts an intermediate value of a waveform of a signal. When the intermediate value is greater than or equal to a predetermined value, the scheme determiner 32 determines that the signal input to the second connecting portion 20 is in the second communication scheme. When the intermediate value is less than the predetermined value, the scheme determiner 32 determines that the signal input to the second connecting portion 20 is in the first communication scheme. It is thus possible to distinguish between a scheme in which a signal is biased and a scheme in which a signal is not biased.

### <Second embodiment>

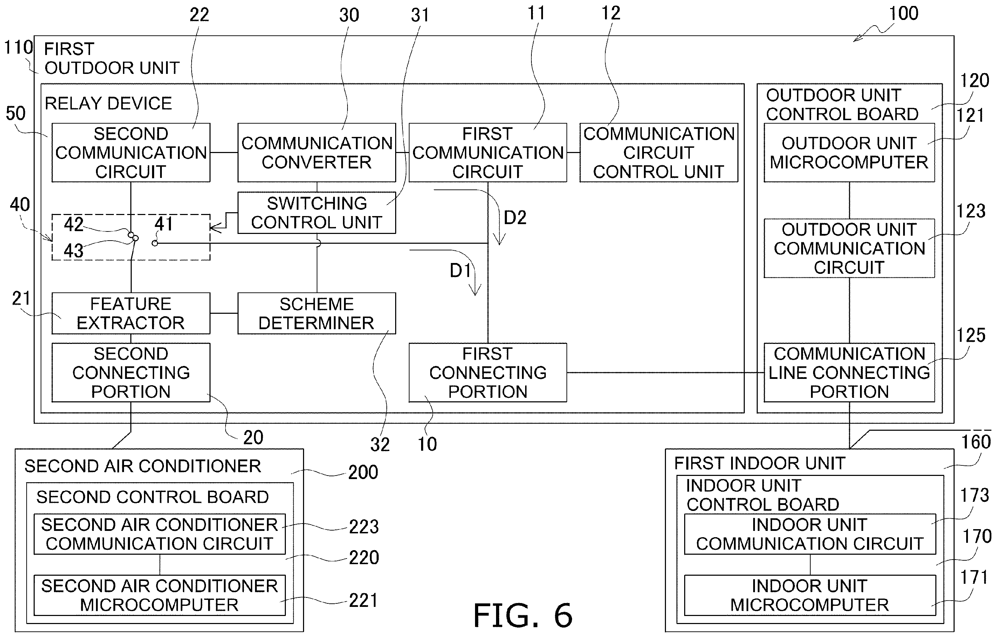

FIG. 6 is a block diagram showing a state in which the outdoor unit communication circuit 123 of the first air conditioner 100 and the second air conditioner communication circuit 223 of the second air conditioner 200 are electrically connected to each other via the relay device 50 according to a second embodiment.

In FIG. 6, a difference between the second embodiment and the first embodiment is that a communication circuit control unit 12 that stops an operation of the first communication circuit 11 is provided. Other configurations are similar to those of the first embodiment, and thus will not be described.

When the scheme determiner 32 detects that a signal of the first communication scheme is input, the communication circuit control unit 12 stops the operation of the first communication circuit 11.

When the first air conditioner 100 is connected to the second connecting portion 20, the transmission path is switched to the first transmission path D1 connecting the first connecting portion 10 and the second connecting portion 20 without passing through the communication converter 30, and the first communication circuit 11 in the relay device 50 is not required to operate. Therefore, the communication circuit control unit 12 stops the operation of the first communication circuit 11, and unnecessary power consumption is suppressed.

### <Third embodiment>

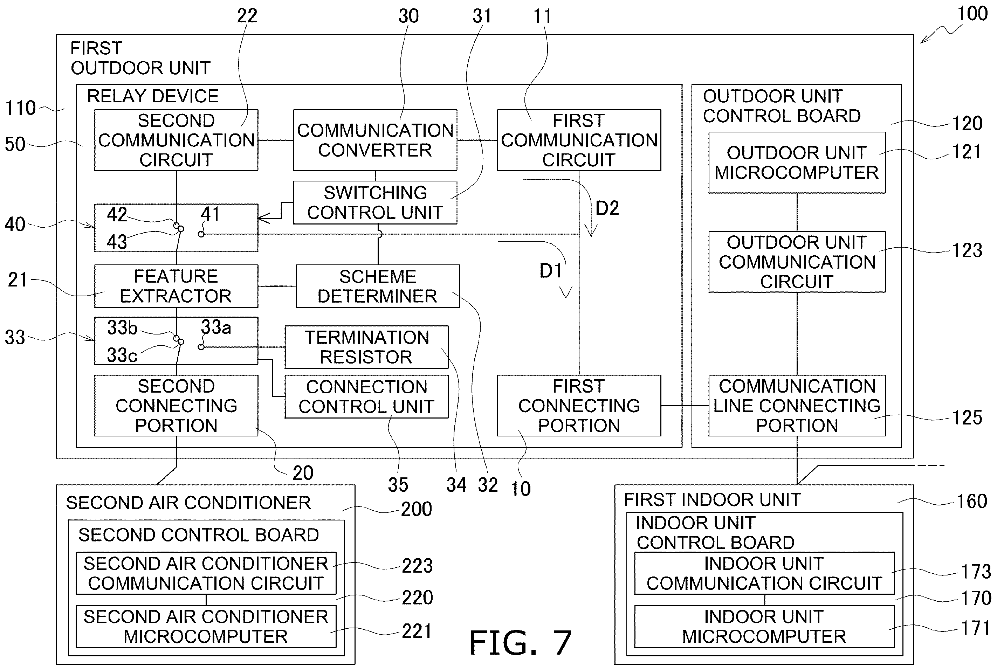

FIG. 7 is a block diagram showing a state in which the outdoor unit communication circuit 123 of the first air conditioner 100 and the second air conditioner communication circuit 223 of the second air conditioner 200 are electrically connected to each other via the relay device 50 according to a third embodiment.

In FIG. 7, a difference between the third embodiment and the first embodiment is that a path shutoff portion 33 is interposed between the second connecting portion 20 and the path switching portion 40, and a connection control unit 35 that controls the path shutoff portion 33 is provided. Other configurations are similar to those of the first embodiment, and thus will not be described.

The path shutoff portion 33 employs a relay. The relay may be a contact relay or a non-contact relay. In the present embodiment, a contact relay is employed.

The path shutoff portion 33 includes a first contact 33a, a second contact 33b, and a third contact 33c that can contact any one of the first contact 33a or the second contact 33b.

The first contact 33a is electrically connected to a termination resistor 34. The second contact 33b is electrically connected to the feature extractor 21. The third contact 33c is electrically connected to the second connecting portion 20. By default, the third contact 33c and the first contact 33a are in contact with each other.

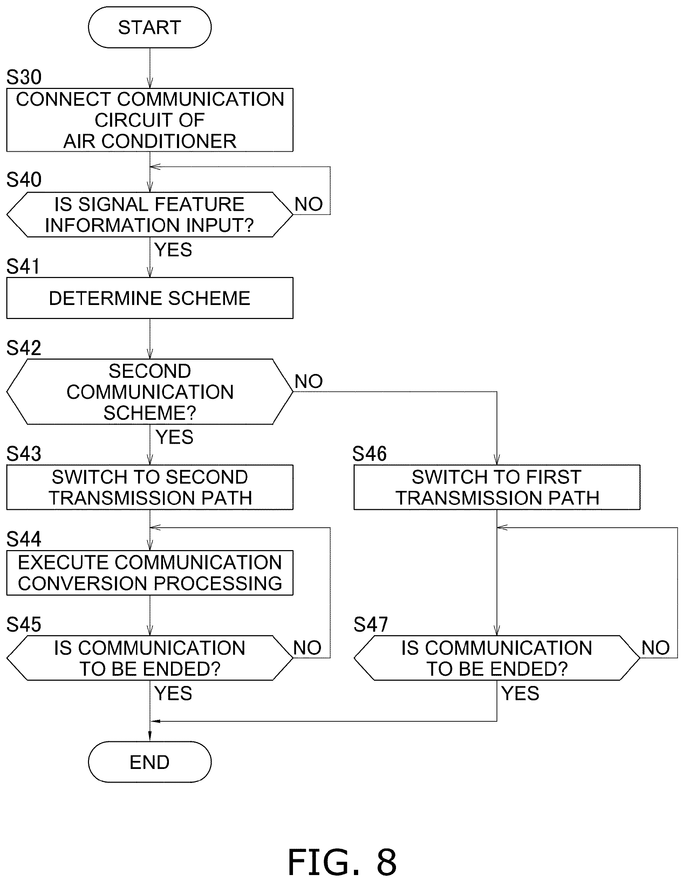

FIG. 8 is a flowchart showing an operation of the relay device 50 according to the third embodiment. Hereinafter, the operation of the relay device 50 will be described with reference to FIG. 8. In the present embodiment, the switching control unit 31 integrally controls each part of the relay device 50.

### (Step S30)

In step S30, when power is supplied to the relay device 50, the connection control unit 35 controls the path shutoff portion 33 to bring the third contact 33c into contact with the second contact 33b to electrically connect the second connecting portion 20 and the feature extractor 21.

### (Steps S40 to S47)

The processing of steps S40 to S47 is similar to the processing of steps S40 to S47 in the first embodiment, and thus will not be described here.

In the third embodiment, while the power supply to the relay device 50 is stopped, the connection control unit 35 can control the path shutoff portion 33 to bring the third contact 33c into contact with the first contact 33a to be connected to the termination resistor 34, and electrically shut off connection between the second connecting portion 20 and the path switching portion 40. By separating the communication circuit of the relay device 50 from an existing communication wiring and connecting the termination resistor 34, a decrease in impedance of the communication path is suppressed, and a decrease in communication performance of an existing communication system is suppressed.

### <Fourth embodiment>

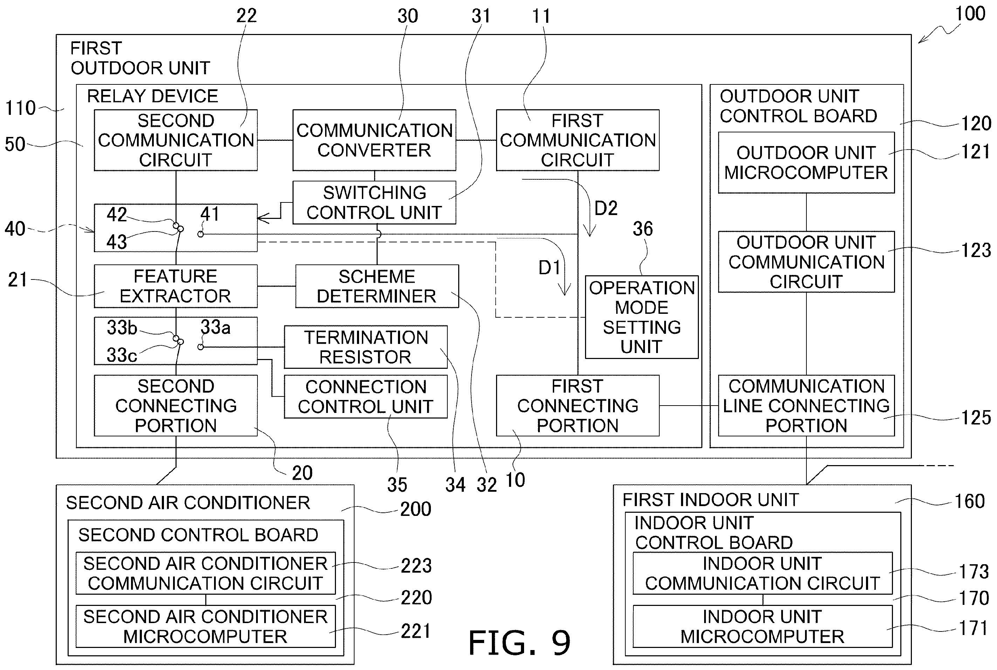

FIG. 9 is a block diagram showing a state in which the outdoor unit communication circuit 123 of the first air conditioner 100 and the second air conditioner communication circuit 223 of the second air conditioner 200 are electrically connected to each other via the relay device 50 according to a fourth embodiment.

In FIG. 9, in the fourth embodiment, an operation mode setting unit 36 is provided to the third embodiment. Other configurations are similar to those of the third embodiment, and thus will not be described.

The operation mode setting unit 36 is an element that selects an automatic setting mode in which the communication scheme is automatically switched and a manual setting mode in which the communication method is manually switched. The mode is selected by the contractor.

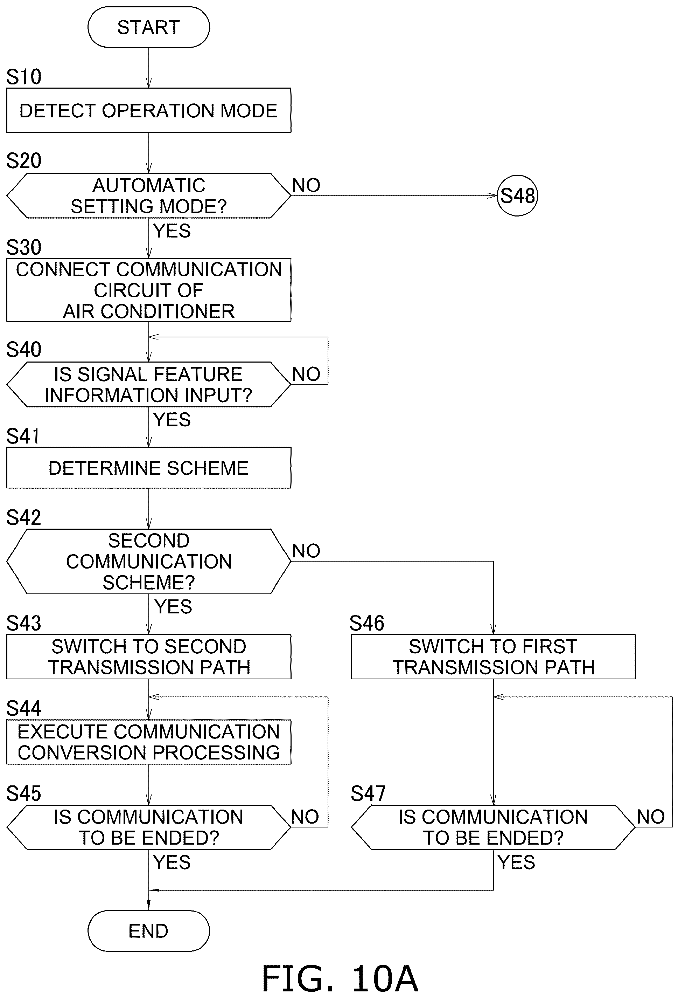

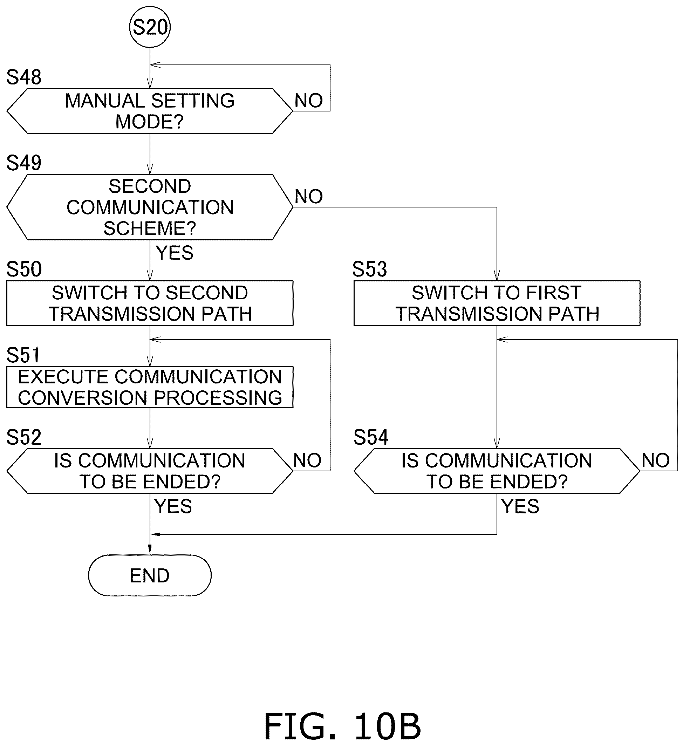

FIGS. 10A and 10B are flowcharts showing an operation of the relay device 50 according to the fourth embodiment. Hereinafter, the operation of the relay device 50 will be described with reference to FIGS. 10A and 10B. In the present embodiment, the switching control unit 31 integrally controls each part of the relay device 50.

### (Step S10)

In step S10, the switching control unit 31 detects an operation mode set by the operation mode setting unit 36.

### (Step S20)

In step S20, the switching control unit 31 determines whether the operation mode is the automatic setting mode. When the operation mode is the automatic setting mode, the processing of step S30 is executed. When the operation mode is not the automatic setting mode, the processing of step S48 is executed.

### (Step S30)

In step S30, when power is supplied to the relay device 50, the connection control unit 35 controls the path shutoff portion 33 to bring the third contact 33c into contact with the second contact 33b to electrically connect the second connecting portion 20 and the feature extractor 21.

### (Steps S40 to S47)

The processing of steps S40 to S47 is similar to the processing of steps S40 to S47 in the first embodiment, and thus will not be described here.

### (Step S48)

In step S48, it is confirmed that the operation setting mode is the manual setting mode.

### (Step S49)

In step S49, it is determined whether the "second communication scheme" is set in the manual setting mode. When the "second communication scheme" is set, the processing in step S50 is executed. When the "first communication scheme" is set, the processing of step S53 is executed.

### (Step S50)

In step S50, the switching control unit 31 brings the third contact 43 into contact with the second contact 42 such that the path switching portion 40 is connected to the second communication circuit 22, and switches the transmission path to the second transmission path D2.

### (Step S51)

In step S51, the communication converter 30 switches the signal of the second communication scheme transmitted from second communication circuit 22 to a signal of the first communication scheme. The signal of the first communication scheme is transmitted from the first communication circuit 11 to the outdoor unit communication circuit 123 of the first air conditioner 100 via the first connecting portion 10.

### (Step S52)

In step S52, the switching control unit 31 determines whether to end the communication conversion operation. For example, when detecting that a communication conversion stop button (not shown) included in the relay device 50 is operated, the switching control unit 31 may determine to end the communication conversion operation. The switching control unit 31 may end the communication conversion when a power supply is stopped.

### (Step S53)

In step S53, the switching control unit 31 brings the third contact 43 into contact with the first contact 41 such that the path switching portion 40 is connected to the outdoor unit communication circuit 123, and switches the transmission path to the first transmission path D1.

### (Step S54)

In step S54, the switching control unit 31 determines whether to end the communication conversion operation. As in step S52, for example, when detecting that the communication conversion stop button included in the relay device 50 is operated, the switching control unit 31 may determine to end the communication conversion operation. The switching control unit 31 may end the communication conversion when a power supply is stopped.

### <Other embodiments>

The feature extractor 21 is not limited to the configuration in the first embodiment shown in FIG. 2. For example, the feature extractor 21 may be configured to extract predetermined communication data included in a signal.

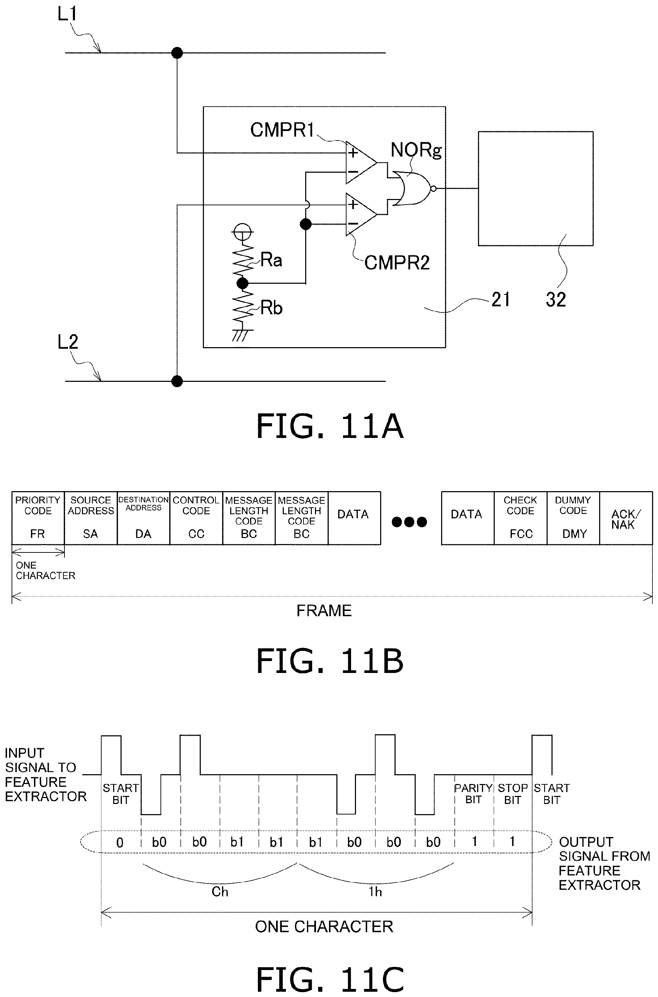

FIG. 11A is a circuit diagram of the feature extractor 21 equipped on the relay device 50 according to another embodiment. FIG. 11B is a conceptual diagram of an AMI-encoded signal input to the feature extractor 21. FIG. 11C is an enlarged diagram of one character in FIG. 11B.

In FIGS. 11A, 11B, and 11C, the feature extractor 21 constitutes a demodulation circuit including a first comparator CMPR1, a second comparator CMPR2, a NOR gate NORg, and reference resistors Ra and Rb.

The feature extractor 21 demodulates the AMI-encoded signal and outputs the demodulated signal to the scheme determiner 32. When data of one frame conforms to a predetermined message format, the scheme determiner 32 determines that the second air conditioner 200 is connected.

The scheme determiner 32 according to another embodiment of the present disclosure determines that the second air conditioner 200 is connected when the data of one frame conforms to the predetermined message format, but may determine the connection on the basis of data of a plurality of frames.

The scheme determiner 32 according to another embodiment of the present disclosure determines that the second air conditioner 200 is connected when the data of one frame conforms to the predetermined message frame, but may determine that the second air conditioner 200 is connected when the communication data is included.

### <Configuration employable in all embodiments and modifications>

In each of the embodiments and modifications described above, an example in which the relay device 50 is provided in the first outdoor unit 110 has been described, but the relay device 50 may be provided in the first indoor unit 160. The relay device 50 may be provided in another device (centralized controller, remote controller, or the like) constituting the first air conditioner 100. The relay device 50 may be provided separately from the devices constituting the first air conditioner 100.

The embodiments of the present disclosure have been described above. It will be understood that various modifications to modes and details should be available without departing from the gist and the scope of the present disclosure recited in the claims.

### REFERENCE SIGNS LIST

- 10: first connecting portion
- 11: first communication circuit (first communication unit)
- 12: communication circuit control unit
- 20: second connecting portion
- 21: feature extractor
- 22: second communication circuit (second communication unit)
- 30: communication converter
- 32: scheme determiner
- 33: path shutoff portion
- 40: path switching portion
- 50: relay device
- 100: first air conditioner
- 200: second air conditioner
- D1: first transmission path
- D2: second transmission path

### CITATION LIST

### PATENT LITERATURE

Patent Literature 1: JP 3789589 B2

## Claims

1. A relay device (50) that relays communication between a first air conditioner (100) that transmits a signal of a first communication scheme and a second air conditioner (200) that transmits a signal of a second communication scheme, the relay device comprising:
a communication converter (30) that converts a communication scheme between the first communication scheme and the second communication scheme;
a first connecting portion (10) to which the first air conditioner (100) is connectable;
a second connecting portion (20) to which the first air conditioner (100) or the second air conditioner (200) is connectable; and
a path switching portion (40) that switches a transmission path of a signal input to the second connecting portion (20) on a basis of a signal input from an air conditioner connected to the second connecting portion (20), wherein
when the first air conditioner (100) is connected to the second connecting portion (20), the path switching portion (40) switches the transmission path to a first transmission path (D1) that connects the first connecting portion (10) and the second connecting portion (20) without passing through the communication converter (30), and
when the second air conditioner (200) is connected to the second connecting portion (20), the path switching portion (40) switches the transmission path to a second transmission path (D2) that connects the first connecting portion (10) and the second connecting portion (20) via the communication converter (30).

2. The relay device (50) according to claim 1, further comprising:
a feature extractor (21) that extracts a feature of the signal input to the second connecting portion (20); and
a scheme determiner (32) that determines whether the signal input to the second connecting portion (20) is in the first communication scheme or the second communication scheme on a basis of the feature, wherein
when the signal is determined to be in the first communication scheme, the path switching portion (40) switches the transmission path to the first transmission path (D1), and
when the signal is determined to be in the second communication scheme, the path switching portion (40) switches the transmission path to the second transmission path (D2).

3. The relay device (50) according to claim 2, wherein the feature extractor (21) extracts a feature of a signal transmitted between the second connecting portion (20) and the path switching portion (40).

4. The relay device (50) according to claim 2, wherein
the path switching portion (40) is switched to the second transmission path (D2) in advance, and
the feature extractor (21) extracts a feature of a signal transmitted between the path switching portion (40) and the communication converter (30).

5. The relay device (50) according to claim 2, wherein
the path switching portion (40) is switched to the first transmission path (D1) in advance, and
the feature extractor (21) extracts a feature of a signal transmitted between the path switching portion (40) and the first connecting portion (10).

6. The relay device (50) according to any one of claims 2 to 5, wherein
the feature extractor (21) extracts an intermediate value of a waveform of the signal, and
when the intermediate value is greater than or equal to a predetermined value, the scheme determiner (32) determines that the signal input to the second connecting portion (20) is in the second communication scheme, and
when the intermediate value is less than the predetermined value, the scheme determiner (32) determines that the signal input to the second connecting portion (20) is in the first communication scheme.

7. The relay device (50) according to any one of claims 2 to 5, wherein
the feature extractor (21) extracts predetermined communication data included in the signal, and
the scheme determiner (32) determines whether the signal input to the second connecting portion (20) is in the first communication scheme or the second communication scheme on a basis of a content of the predetermined communication data.

8. The relay device according to any one of claims 2 to 7, further comprising:
a first communication unit (11) that allows a signal of the first communication scheme to be transmitted;
a second communication unit (22) that allows a signal of the second communication scheme to be transmitted; and
a communication circuit control unit (12) that stops an operation of the first communication unit (11), wherein
when the scheme determiner (32) detects that the signal of the first communication scheme is input, the communication circuit control unit (12) stops an operation of at least one of the first communication unit (11) or the second communication unit (22).

9. The relay device according to claim 8, wherein the communication converter (30) converts the signal of the second communication scheme transmitted from the second communication unit (22) into a signal of the first communication scheme communicable with the first communication unit (11), and transmits the signal to the first communication unit (11).

10. The relay device (50) according to any one of claims 1 to 9, further comprising a path shutoff portion (33) that is interposed between the second connecting portion (20) and the path switching portion (40) and electrically shuts off connection between the second connecting portion (20) and the path switching portion (40) while power supply to the relay device (50) is stopped.

11. An outdoor unit comprising:
the relay device (50) according to any one of claims 1 to 10; and
a control circuit that connects, via the first connecting portion (10), an indoor unit that performs communication in the first communication scheme.

12. An indoor unit comprising:
the relay device (50) according to any one of claims 1 to 10; and
a control circuit that connects, via the first connecting portion (10), another indoor unit that performs communication in the first communication scheme.

13. An air conditioning system comprising:
the first air conditioner (100); and
the relay device (50) according to any one of claims 1 to 10.
